# EUROPEAN PATENT SPECIFICATION

(11) **EP 4 542 089 B1**
(45) Date of publication and mention of the grant of the patent: **10.06.2026**
(21) Application number: 24206739.5
(22) Date of filing: 15.10.2024
(51) Int. Cl.: F16H 61/4017, B60W 30/188, F16H 61/46, F16H 61/465

(54) **METHOD AND CONTROL SYSTEM FOR A PROPULSION SYSTEM OF A WORK OR AGRICULTURAL VEHICLE**
VERFAHREN UND STEUERSYSTEM FÜR EIN ANTRIEBSSYSTEM EINES ARBEITS- ODER LANDWIRTSCHAFTLICHEN FAHRZEUGS
PROCÉDÉ ET SYSTÈME DE COMMANDE POUR UN SYSTÈME DE PROPULSION D'UN VÉHICULE DE TRAVAIL OU AGRICOLE

(30) Priority: 20.10.2023 IT 202300022032
(43) Date of publication of application: 23.04.2025
(73) Proprietor: CNH Industrial Italia S.p.A., 10156 Torino (IT)
(72) Inventor: Garramone, Adriano, 10156 Turin (IT); Gravili, Andrea, 10156 Turin (IT); Venezia, Antonio, 10156 Turin (IT); Liberti, Stefano, 10156 Turin (IT)
(74) Representative: CNH Industrial IP Department

(56) References cited:
- EP-A1- 2 123 948
- EP-A1- 3 933 121
- EP-A1- 4 026 954
- US-A1- 2019 226 179

## Description

### Field of the invention

The present invention relates to the field of hydraulic transmissions of work machines and agricultural machines, in which the hydraulic transmission is driven by an internal combustion engine.

### State of the art

In work and agricultural machines, the transmission to transfer the motion of a prime mover to the wheels is hydraulic. Very often the transmission defines a series configuration, in which the prime mover drives a hydraulic pump with variable displacement, which, in turn, drives a hydraulic motor which can have both fixed and variable displacement.

The pump and the hydraulic motor are interconnected in a known way by means of a so-called high pressure hydraulic line or "forward" line and a low pressure hydraulic line or "return" line of the hydraulic oil towards the hydraulic pump.

A gearbox with discrete ratios is often, but not always, located between the hydraulic motor and the wheels. Very often there are just two gears, to facilitate the autonomous movement of the vehicle from one place of work to another. Generally, the rotation speed of the prime mover is directly proportional to the position of the accelerator lever and the displacement of the pump is proportional to the rotation speed of the prime mover, while the displacement of the hydraulic motor is inversely proportional to the speed of the vehicle.

Consequently, the speed of the vehicle and the rotation speed of the prime mover are approximately directly proportional to each other.

Consequently, the speed of the vehicle and the position of the accelerator lever are approximately directly proportional to each other.

This first operating mode is for convenience defined as "accelerator-base", as the rotation speed of the prime mover is approximately directly proportional to the position of the accelerator lever and the speed of the vehicle depends on the rotation speed of the prime mover.

The term "approximately" highlights that the control is open loop; therefore, an increase in gradient causes the vehicle and also the prime mover to slow down.

This fact is very advantageous when the vehicle is being worked on because the driver can use the accelerator lever to manage the generation of hydraulic fluid necessary to operate the various on-board devices functional to the work. When the vehicle, however, moves from one workplace to another, fuel consumption may be excessive and therefore the same applicant has provided a method of managing the engine and hydraulic transmission with document EP3933121A.

However, the implementation of the ECO mode according to this solution is especially useful during long vehicle movements and difficult to exploit during the vehicle's work phases.

EP2119943 shows an ECO mode according to which the combustion engine is controlled to constantly maintain a pre-ordained rotation speed, called "limit speed", which guarantees optimal fuel consumption, while the hydrostatic transmission ratio is modified in order to allow speed variations of the vehicle in response to an action on the accelerator pedal.

A solution identified by the present applicant and not disclosed, provides that during the transition from the basic accelerator mode to the ECO mode, the transmission is controlled by means of a first control, called "speed control", which has the task of modifying the transmission ratio hydrostatic transmission in order to keep the speed of the vehicle unchanged. Advantageously, the operator does not notice the transition from basic accelerator mode to ECO mode.

At the same time as the transition to ECO mode, a second control is activated, called "pressure control", which has the task of monitoring the pressure in the high pressure line and regulating the displacement of the hydraulic motor of the hydrostat in order to force the current pressure value at a predetermined pressure threshold, when the current pressure value exceeds this predetermined pressure threshold, without changing the operating point of the prime mover.

Advantageously, in this way it is possible to maintain the ECO mode even when the vehicle encounters a slope, or when it forks a pile of material, as the working point of the prime mover remains unchanged in the condition of lower fuel consumption.

### Summary of the invention

The aim of the present invention is to make the behaviour of the vehicle more flexible in relation to the current mission.

The basic idea of the present invention is to set pairs of values relative to
- Limit speed value
- Pressure threshold value.

In particular, at least two pairs of values are expected. Even more preferably, three pairs of values are provided.

In this way, it is possible to adapt the operating point of the engine and the transmission ratio of the hydrostat to the mission of the vehicle.

For example, if the vehicle moves on the road, a low torque value and a higher vehicle speed are necessary. At the same time, the hydraulic functions, which power the working parts of the vehicle, do not require power, therefore it is advantageous to set a relatively low limit speed value and a relatively high pressure threshold value, in order to allow a high transmission ratio to the hydrostat.

On the contrary, when the vehicle works on site and has the hydraulic functions heavily used, then it is preferable to set a relatively high limit speed value to guarantee sufficient flow of hydraulic oil and a relatively low value of the pressure threshold, in order to force a relatively low transmission ratio.

It is clear that the term "relative" used here implies a relationship between the terms low and high used above, in the sense that low is lower than high.

According to a further preferred aspect of the invention, together with the pairs of values indicated above, a gain value of the reactivity of the hydrostat response to the variation in the inclination of the accelerator lever is also set.

As described above, in ECO mode, the accelerator lever impacts exclusively on the hydrostat transmission ratio. Therefore, when the vehicle moves on the road it is desired to set the reactivity of the hydrostat to the variation in the inclination of the accelerator lever at a relatively low level, so as to limit jerks to the vehicle.

On the contrary, when the vehicle operates on the construction site, the operator expects a high reactivity of the vehicle to increase its productivity and therefore, the value of the gain that impacts the reactivity of the hydrostat is relatively high compared to when the vehicle moves on the road.

Predetermined triads of values relating to are therefore defined
- Limit speed value
- Pressure threshold value
- Value of the gain of the hydrostat reactivity to variations in the inclination of the accelerator pedal.

According to a further aspect of the invention, one of the three predetermined values can be set manually by the operator or can be set automatically by the vehicle. The present applicant, in fact, has implemented a technique for automatic recognition of the current mission of the vehicle as described in EP4026954A.

The dependent claims describe preferred variants of the invention.

### Brief description of the figres

Further objects and advantages of the present invention will be clear from the following detailed description of an example of its implementation (and its variants) and from the attached drawings given purely for explanatory and non-limiting purposes, in which:
Fig. 1 shows an example of a propulsion scheme of a work or agricultural vehicle in which the present invention is implemented,
Fig. 2 shows a control lever of a work tool connected to the vehicle, which is the subject of the present invention,
Fig. 3 shows a diagram which relates a variation in the configuration of the hydrostat, due to a variation in the position of the accelerator lever, with respect to time;
Fig. 4 shows a flowchart of a method of automatic selection of the vehicle set point as described below.

The same reference numbers and letters in the figures identify the same elements or components or functions.

In the context of this description the term "second" component does not imply the presence of a "first" component. These terms are in fact used as labels to improve clarity, having no ordinal meaning unless it is clear from the text that there is a precise order to be respected.

The elements and characteristics illustrated in the different preferred embodiments, including the drawings, can be combined with each other as long as they are in conformity with the claims.

### Detailed description

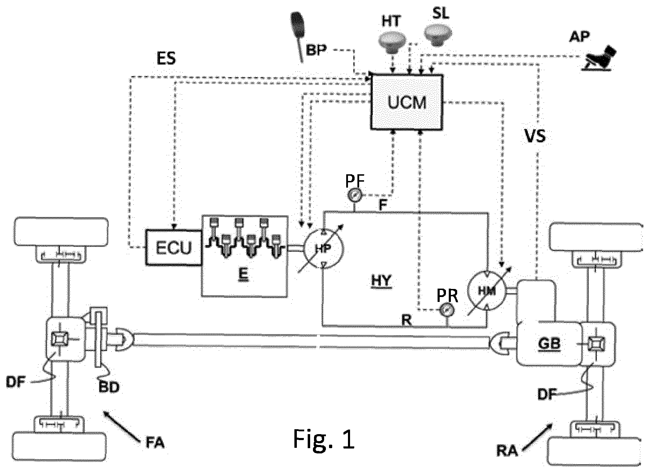

Fig. 1 shows a diagram of the propulsion system of a work or agricultural vehicle.

The propulsion system includes a prime mover E, generally an internal combustion engine, for example Diesel or spark ignition.

The prime mover is configured to drive a variable geometry hydraulic pump HP in rotation, which powers a hydraulic motor HM, for vehicular propulsion, via a forward or high pressure hydraulic line F and a return or low pressure line R.

Preferably, the prime mover is connected to the vehicular wheels only through the hydrostat.

The hydraulic motor has a shaft operationally associated with a driving axle RA of the vehicle.

Preferably, this association is achieved by means of a discrete ratio gearbox GB. Generally, the secondary shaft of the GB gearbox rotates a door of a DF differential, to rotate the two axle shafts of the RA drive axle. The configuration shown in Fig. 1 is four-wheel drive, so there is a rear driving axle RA and a front driving axle FA.

The configuration shown is itself known.

According to the present invention, the hydraulic pump can be controlled independently of the rotation speed of the prime mover which drives the rotation of the hydraulic pump itself. More preferably, the hydraulic motor has variable displacement and can be controlled independently of the hydraulic pump by means of respective electro-hydraulic valves, not shown.

An engine control processing unit ECU controls the operation of the prime mover.

A vehicle processing unit UCM interfaces with the engine control processing unit ECU and controls the hydraulic transmission HY as well as monitors the position of levers, buttons and human/machine interface controls, both in relation to the movement of the vehicle and in relation to the operation of arms and working parts connected to the vehicle.

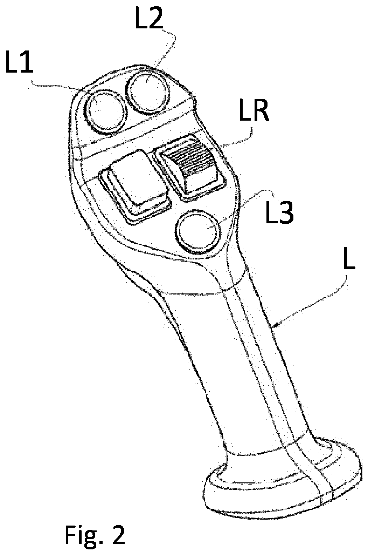

L indicates, in Fig. 2, the control lever of a working part of the vehicle, such as an arm or a tool.

AP indicates, in Fig. 1, the accelerator pedal, and SL indicates the Light, Medium, Heavy mode selector and, optionally, the smart mode.

The existence of two distinct processing units is entirely optional. A single processing unit can control both the prime mover and all the other functions of the vehicle and monitor the activation of commands by the operator.

The present invention is preferably implemented in the vehicular processing unit UCM, but there is nothing to prevent it from being implemented in the ECU.

The engine speed ES can be measured in any way, for example by means of the so-called phonic wheel associated with the crankshaft (not shown).

In basic throttle mode, as the speed of the VS vehicle increases, the displacement of the hydraulic pump increases, while the displacement of the hydraulic motor decreases.

The inverse proportionality between the value of the displacement of the hydraulic pump and the value of the displacement of the hydraulic motor can be tabulated according to a pre-ordained strategy.

For example, a pressure sensor PF is arranged on the high pressure hydraulic line F and a pressure sensor PR is arranged on the return hydraulic line R.

According to the present invention, in response to the activation of the ECO mode, a control is activated, called "pressure control", which has the task of monitoring the pressure in the high pressure line and regulating the displacement of the hydraulic motor of the hydrostat so as to force the current pressure value to a predetermined pressure threshold, when the current pressure value exceeds this predetermined pressure threshold.

According to the present invention, the operator can select one of several pairs of values, each pair comprising a
- Value of the limit speed and a
- Value of the predetermined pressure threshold.

For example, the operator has the possibility to select among the items:
- Heavy,
- Medium
- Light,
through the SL selector located on the dashboard, or through any of the buttons L1 - L3 of the lever L in Fig. 2. These items are generally named as set points.

For example, when the vehicle moves on the road at high speed and a high flow rate of hydraulic oil is not required, the operator can select the Light set point, with a low limit speed value, for example 1700 rpm , and a high pressure threshold value, for example 380 bar, so that the hydrostat can maintain a high transmission ratio.

Instead, when the vehicle has to carry out heavy work, such as digging, it moves at a low speed and needs a high flow rate of hydraulic oil, then the selector can be set to the Heavy set point, with a high value of the limit speed, for example 2300 rpm, and a low value of the pressure threshold, for example 200 bar, so as to maintain a low transmission ratio to the hydrostat.

Instead, the selection of the Medium set point can be used when the vehicle must carry out operations to move a load, for example a pallet, and needs a speed and hydraulic oil flow rate intermediate between the two previous ones, with a value intermediate of the limit speed, for example 2000 rpm, and an intermediate value of the pressure threshold, for example 300 bar.

According to a further aspect of the invention, the selection of the Light, Medium or Heavy set point also involves setting a proportionality factor between the configuration of the hydrostat, required by the position of the accelerator lever, and the time.

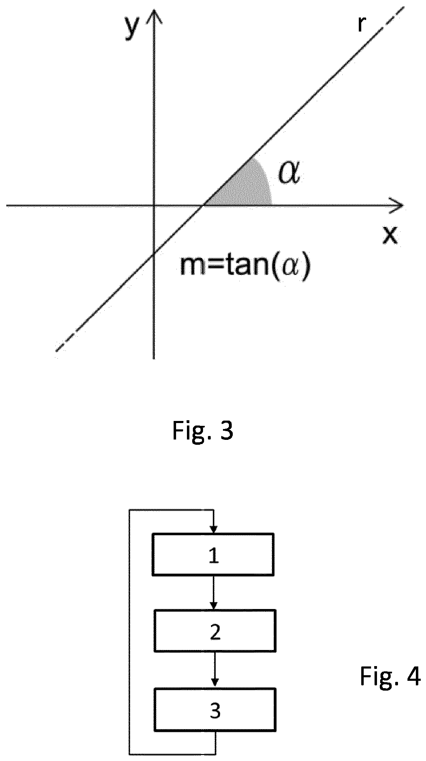

With reference to Fig. 3, a graph is shown in which a straight line r is indicated which intersects the Cartesian axes x,y; Where:
- x indicates the time taken to request a configuration of the hydrostat, from the moment of the request made using the accelerator lever,
- y is the hydrostat configuration.

The angle α, as known, identifies the angular coefficient of the straight line r.

According to a preferred variant of the invention, the slope of the curve (angle α) is set together with the other pairs of values, so as to define triples of values.

For convenience, later on, rather than talking about pairs or triples of values, we prefer to refer to *tuples,* so as not to constrain each tuple to two or three values.

With a relatively low α coefficient, the hydrostat adapts more slowly to variations in the position of the accelerator lever and vice versa with relatively high α. It is worth remembering here that in ECO mode, the prime mover is operated at a fixed speed corresponding to the limit speed, while the accelerator lever impacts exclusively on the hydrostat transmission ratio, allowing the speed of the vehicle to be varied.

According to this description, the terms "relatively high" and "relatively low" are to be considered together in a comparative relationship, in the sense that a relatively high value is higher than a relatively low value.

Therefore, with Light, Medium and Heavy, three tuples of values are preferably set.

The finite and countable set includes three tuples of values ((a1,b1), (a2,b2), (a3,b3)) in which a1, a2 and a3 belong to the set A of limiting speeds, while b1, b2 and b3 belong to the set B of pressure thresholds.

The set A and the set B are in a one-to-one relationship with each other because a value in the set A corresponds to one and only one value in the other set B and therefore the combination is not foreseen (for example (a1,b2) or (a3,b1), etc..).

According to a further aspect of the invention, the SL selector allows you to set the "Smart" mode. In this case, the selection of the most suitable tuple is delegated to the vehicle itself, i.e. to the UCM vehicular processing unit. The present applicant is the owner of a patent with no. EP4026954 which describes a signal conditioning technique to be input to a neural network, for the purpose of recognizing a current mission of the vehicle.

The result of the identification of the current mission is used to automatically select the most suitable tuple.

In particular, the vehicle is equipped with an articulated arm connected to a vehicle chassis such as to assume a plurality of operating configurations and a propulsion system such as to allow movement of the vehicle with respect to a support surface of the vehicle itself.

When the Smart set point is selected, then, with reference to Fig. 4, the processing unit performs the following steps:
- (Step 1) Observation, for a predetermined time interval, of a frequency and duration of each operational configuration, and of activation of the propulsion system,
- (Step 2) Determining a current mission of the vehicle,
- (Step 3) selection of the Low, Medium or Heavy tuple or set point respectively when said vehicle mission coincides with a rescue mission

+ transfer of the vehicle by road or
+ heavy operation for example excavation or
+ moving a load.

A higher number of parameter configurations does not appear to bring particular advantages.

The present invention can advantageously be carried out by means of a computer program, which includes coding means for carrying out the steps of the method, when this program is executed on a computer. Therefore, it is understood that the scope of protection extends to said computer program and further to computer readable means comprising a recorded message, said computer readable means comprising program coding means for carrying out the steps of the method, when said program is executed on a computer.

Constructive variations to the non-limiting example described are possible, without departing from the scope of protection of the claims.

From the above description, the person skilled in the art is able to realize the object of the invention without introducing further construction details.

## Claims

1. A method for controlling a propulsion system of a work or agricultural vehicle, wherein the propulsion system includes a prime mover (E) and a hydraulic transmission (HY) including a variable displacement pump (HP) configured to be driven in rotation by the prime mover and a variable displacement hydraulic motor (HM), operationally connected to the pump via a high pressure (F) and a low pressure (R) hydraulic line, the method including
- a first operating mode, named as "accelerator-base", wherein the rotation speed (ES) of the prime mover is directly proportional to a position of an accelerator lever (AP) and wherein a speed (VS) of the vehicle and the rotation speed of the prime mover are approximately directly proportional to each other and
- a second operating mode, named as "ECO", wherein the prime mover is operated at a predetermined approximately fixed limit speed and wherein said position of said accelerator lever indicates exclusively a transmission ratio of the hydrostatic transmission;
the method is **characterized in** comprising a procedure, in said second operating mode, of controlling the transmission ratio of the hydraulic transmission (HY) so as to force a current pressure value measured on the high pressure line (F) to a predetermined pressure threshold, when the value of current pressure exceeds the predetermined pressure threshold,
the method comprising a procedure of selecting one of two or more tuples from a finite and countable set of tuples, wherein each tuple comprises
- said limit speed value and
- said value of the predetermined pressure threshold.

2. Method according to claim 1, wherein each of said tuple also includes a value relating to a proportionality relationship between the configuration of the hydrostat, indicated by the position of the accelerator lever, and the time.

3. Method according to claim 1 or 2, wherein a first tuple, named as "Light", includes a relatively low limiting speed value and a relatively high value of said predetermined pressure threshold and wherein a second tuple, named as "Heavy" " includes a relatively high limit speed value and a relatively low value of said predetermined pressure threshold.

4. Method according to claim 3, wherein when said tuple includes said value relating to the proportionality relationship between the configuration of the hydrostat, required by the position of the accelerator lever, and the time, then said first tuple, named as "Light", includes a relatively low value of said value relating to the proportionality ratio, while said second tuple, named as "Heavy", includes a relatively high value of said value relating to the proportionality ratio.

5. Method according to claim 1, wherein in a mode named as "Smart", the following steps are performed:
- (Step 1) Observation, for a predetermined time interval, of a frequency and duration of each operational configuration, and of activation of the propulsion system,
- (Step 2) Determining a current mission of the vehicle,
- (Step 3) selection of the Low, Medium or Heavy tuple when said vehicle mission coincides respectively with a mission
+ transfer of the vehicle by road or
+ heavy operation such as excavation or
+ moving a load.

6. A computer program comprising program-coding means capable of carrying out all steps of any of claims 1 to 5, when said program is run on a computer.

7. Computer readable means comprising a recorded program, said computer readable means comprising program coding means capable of carrying out all steps of any of claims 1 to 5, when said program is run on a computer.

8. Work or agricultural vehicle including - a propulsion system comprises a prime mover (E) and a hydraulic transmission (HY) comprising a variable displacement pump configured to be driven in rotation by the prime mover and a variable displacement hydraulic motor (HM), operationally connected to the pump by a forward and a return hydraulic line, the propulsion system being configured to operate according to
- a first operating mode, named as "accelerator-base", wherein the rotation speed (ES) of the prime mover is directly proportional to a position of an accelerator lever and wherein a speed (VS) of the vehicle and the speed of rotation of the prime mover are approximately directly proportional to each other and
- a second operating mode, named as "ECO", wherein the prime mover is operated at a predetermined approximately fixed limit speed and wherein said position of said accelerator lever indicates exclusively a transmission ratio of the hydrostatic transmission;
the vehicle is **characterized in that** it is configured to carry out a procedure, in said second operating mode, of controlling the transmission ratio of the hydrostat so as to force a current pressure value measured on the high pressure line (F) to a predetermined pressure threshold, when the value of current pressure exceeds the predetermined pressure threshold,
- and it comprises vehicular processing means (UCM) configured to perform a procedure for selecting one of two or more tuples belonging to a finite and countable set of tuples, wherein each tuple comprises
- said limit speed value and
- said value of the predetermined pressure threshold.

## Patentansprüche

1. Verfahren zur Steuerung eines Antriebssystems eines Arbeits- oder Landwirtschaftsfahrzeugs, wobei das Antriebssystem eine Antriebsmaschine (E) und ein hydraulisches Getriebe (HY) umfasst, das eine Verstellpumpe (HP), die dazu konfiguriert ist, von der Antriebsmaschine rotierend angetrieben zu werden, und einen hydraulischen Verstellmotor (HM) umfasst, der über eine Hochdruck- (F) und eine Niederdruck- (R) Hydraulikleitung betriebsmäßig mit der Pumpe verbunden ist, wobei das Verfahren umfasst
- einen ersten Betriebsmodus, bezeichnet als "Beschleuniger-Basis", wobei die Drehzahl (ES) der Antriebsmaschine direkt proportional zu einer Position eines Beschleunigerhebels (AP) ist und wobei eine Geschwindigkeit (VS) des Fahrzeugs und die Drehzahl der Antriebsmaschine etwa direkt proportional zueinander sind und
- einen zweiten Betriebsmodus, bezeichnet als "ECO", wobei die Antriebsmaschine bei einer vorbestimmten etwa festen Grenzgeschwindigkeit betrieben wird und wobei die Position des Beschleunigerhebels ausschließlich ein Übersetzungsverhältnis des hydrostatischen Getriebes anzeigt;
das Verfahren ist **dadurch gekennzeichnet, dass** es ein Vorgehen umfasst, in dem besagten zweiten Betriebsmodus, zur Steuerung des Übersetzungsverhältnisses des hydraulischen Getriebes (HY), um einen aktuellen Druckwert, der an der Hochdruckleitung (F) gemessen wird, auf einen vorbestimmten Druckschwellenwert zu zwingen, wenn der Wert des aktuellen Drucks den vorbestimmten Druckschwellenwert überschreitet,
das Verfahren umfasst ein Vorgehen zur Auswahl eines von zwei oder mehr Tupeln aus einer endlichen und abzählbaren Menge von Tupeln, wobei jedes Tupel umfasst
- besagten Grenzgeschwindigkeitswert und
- besagten Wert des vorbestimmten Druckschwellenwerts.

2. Verfahren nach Anspruch 1, wobei jedes der Tupel auch einen Wert umfasst, der sich auf eine Proportionalitätsbeziehung zwischen der Konfiguration des Hydrostats, die durch die Position des Beschleunigerhebels angezeigt wird, und der Zeit bezieht.

3. Verfahren nach Anspruch 1 oder 2, wobei ein erstes Tupel, bezeichnet als "Leicht", einen relativ niedrigen Grenzgeschwindigkeitswert und einen relativ hohen Wert des vorbestimmten Druckschwellenwerts umfasst und wobei ein zweites Tupel, bezeichnet als "Schwer", einen relativ hohen Grenzgeschwindigkeitswert und einen relativ niedrigen Wert des vorbestimmten Druckschwellenwerts umfasst.

4. Verfahren nach Anspruch 3, wobei, wenn das Tupel den Wert bezüglich der Proportionalitätsbeziehung zwischen der Konfiguration des Hydrostats, die durch die Position des Beschleunigerhebels erforderlich ist, und der Zeit umfasst, dann das erste Tupel, bezeichnet als "Leicht", einen relativ niedrigen Wert des Werts bezüglich des Proportionalitätsverhältnisses umfasst, während das zweite Tupel, bezeichnet als "Schwer", einen relativ hohen Wert des Werts bezüglich des Proportionalitätsverhältnisses umfasst.

5. Verfahren nach Anspruch 1, wobei in einem als "Smart" bezeichneten Modus die folgenden Schritte durchgeführt werden:
- (Schritt 1) Beobachtung, für ein vorbestimmtes Zeitintervall, einer Frequenz und Dauer jeder Betriebskonfiguration und einer Aktivierung des Antriebssystems,
- (Schritt 2) Bestimmen einer aktuellen Mission des Fahrzeugs,
- (Schritt 3) Auswahl des Leicht-, Mittel- oder Schwer-Tupels, wenn die besagte Fahrzeugmission jeweils mit einer Mission übereinstimmt
+ Überführung des Fahrzeugs auf dem Straßenweg oder
+ schwere Arbeiten wie Aushub oder
+ Bewegen einer Last.

6. Computerprogramm, das Programmcodiermittel umfasst, die in der Lage sind, alle Schritte eines der Ansprüche 1 bis 5 auszuführen, wenn das Programm auf einem Computer läuft.

7. Computerlesbare Mittel, die ein aufgezeichnetes Programm umfassen, wobei die computerlesbaren Mittel Programmcodiermittel umfassen, die in der Lage sind, alle Schritte eines der Ansprüche 1 bis 5 auszuführen, wenn das Programm auf einem Computer läuft.

8. Arbeits- oder Landwirtschaftsfahrzeug umfassend
- ein Antriebssystem umfasst eine Antriebsmaschine (E) und ein hydraulisches Getriebe (HY), das eine Verstellpumpe, die dazu konfiguriert ist, von der Antriebsmaschine rotierend angetrieben zu werden, und einen hydraulischen Verstellmotor (HM) umfasst, der mit der Pumpe durch eine Vorlauf- und eine Rücklauf-Hydraulikleitung betriebsmäßig verbunden ist, wobei das Antriebssystem dazu konfiguriert ist, zu arbeiten gemäß
- einem ersten Betriebsmodus, bezeichnet als "Beschleuniger-Basis", wobei die Drehzahl (ES) der Antriebsmaschine direkt proportional zu einer Position eines Beschleunigerhebels ist und wobei eine Geschwindigkeit (VS) des Fahrzeugs und die Drehzahl der Antriebsmaschine etwa direkt proportional zueinander sind und
- einem zweiten Betriebsmodus, bezeichnet als "ECO", wobei die Antriebsmaschine bei einer vorbestimmten etwa festen Grenzgeschwindigkeit betrieben wird und wobei die Position des Beschleunigerhebels ausschließlich ein Übersetzungsverhältnis des hydrostatischen Getriebes anzeigt;
das Fahrzeug ist **dadurch gekennzeichnet, dass** es konfiguriert ist, um ein Vorgehen auszuführen, in dem zweiten Betriebsmodus, zur Steuerung des Übersetzungsverhältnisses des Hydrostats, um einen aktuellen Druckwert, der an der Hochdruckleitung (F) gemessen wird, auf einen vorbestimmten Druckschwellenwert zu zwingen, wenn der Wert des aktuellen Drucks den vorbestimmten Druckschwellenwert überschreitet,
- und es umfasst Fahrzeug-Verarbeitungsmittel (UCM), die dazu konfiguriert sind, ein Vorgehen zur Auswahl eines von zwei oder mehr Tupeln durchzuführen, die zu einer endlichen und abzählbaren Menge von Tupeln gehören, wobei jedes Tupel umfasst
- besagten Grenzgeschwindigkeitswert und
- besagten Wert des vorbestimmten Druckschwellenwerts.

## Revendications

1. Procédé permettant de commander un système de propulsion d'un véhicule de travail ou agricole, dans lequel le système de propulsion comporte un moteur principal (E) et une transmission hydraulique (HY) comportant une pompe à cylindrée variable (HP) conçue pour être entraînée en rotation par le moteur principal et un moteur hydraulique à cylindrée variable (HM), relié de manière fonctionnelle à la pompe par l'intermédiaire d'une ligne hydraulique haute pression (F) et basse pression (R), le procédé comportant
- un premier mode de fonctionnement, dénommé « base d'accélérateur », dans lequel la vitesse de rotation (ES) du moteur principal est directement proportionnelle à une position d'un levier d'accélérateur (AP) et dans lequel une vitesse (VS) du véhicule et la vitesse de rotation du moteur principal sont approximativement directement proportionnelles l'une à l'autre et
- un second mode de fonctionnement, dénommé « ECO », dans lequel le moteur principal fonctionne à une vitesse limite prédéterminée approximativement fixe et dans lequel ladite position dudit levier d'accélérateur indique exclusivement un rapport de transmission de la transmission hydrostatique ;
le procédé est **caractérisé en ce qu'il** comprend une procédure, dans ledit second mode de fonctionnement, consistant à commander le rapport de transmission de la transmission hydraulique (HY) de manière à forcer une valeur de pression actuelle mesurée sur la ligne haute pression (F) à un seuil de pression prédéterminé, lorsque la valeur de pression actuelle dépasse le seuil de pression prédéterminé,
le procédé comprenant une procédure de sélection de l'un parmi deux tuples ou plus à partir d'un ensemble fini et dénombrable de tuples, dans lequel chaque tuple comprend
- ladite valeur de vitesse limite et
- ladite valeur du seuil de pression prédéterminé.

2. Procédé selon la revendication 1, dans lequel chacun desdits tuples comporte également une valeur relative à une relation de proportionnalité entre la configuration de l'hydrostat, indiquée par la position du levier d'accélérateur, et le temps.

3. Procédé selon la revendication 1 ou 2, dans lequel un premier tuple, dénommé « léger », comporte une valeur de vitesse limite relativement faible et une valeur relativement élevée dudit seuil de pression prédéterminé et dans lequel un second tuple, dénommé « lourd », comporte une valeur de vitesse limite relativement élevée et une valeur relativement faible dudit seuil de pression prédéterminé.

4. Procédé selon la revendication 3, dans lequel lorsque ledit tuple comporte ladite valeur relative à la relation de proportionnalité entre la configuration de l'hydrostat, requise par la position du levier d'accélérateur, et le temps, alors ledit premier tuple, dénommé « léger », comporte une valeur relativement faible de ladite valeur relative au rapport de proportionnalité, tandis que ledit second tuple, dénommé « lourd » comporte une valeur relativement élevée de ladite valeur relative au rapport de proportionnalité.

5. Procédé selon la revendication 1, dans lequel, dans un mode dénommé « intelligent », les étapes suivantes sont réalisées :
- (Étape 1) l'observation, pendant un intervalle de temps prédéterminé, d'une fréquence et d'une durée de chaque configuration fonctionnelle, et de l'activation du système de propulsion,
- (Étape 2) la détermination d'une mission actuelle du véhicule,
- (Étape 3) la sélection du tuple faible, moyen ou lourd lorsque ladite mission de véhicule coïncide respectivement avec une mission
+ de transfert du véhicule par la route ou
+ d'opération lourde telle que l'excavation ou
+ de déplacement d'une charge.

6. Programme informatique comprenant un moyen de codage de programme capable d'effectuer toutes les étapes selon l'une quelconque des revendications 1 à 5, lorsque ledit programme est exécuté sur un ordinateur.

7. Moyen lisible par ordinateur comprenant un programme enregistré, ledit moyen lisible par ordinateur comprenant un moyen de codage de programme capable d'effectuer toutes les étapes selon l'une quelconque des revendications 1 à 5, lorsque ledit programme est exécuté sur un ordinateur.

8. Véhicule de travail ou agricole comportant
- un système de propulsion comprend un moteur principal (E) et une transmission hydraulique (HY) comprenant une pompe à cylindrée variable conçue pour être entraînée en rotation par le moteur principal et un moteur hydraulique à cylindrée variable (HM), relié de manière fonctionnelle à la pompe par une conduite hydraulique aller et une conduite hydraulique de retour, le système de propulsion étant conçu pour fonctionner conformément à
- un premier mode de fonctionnement, dénommé « base d'accélérateur », dans lequel la vitesse de rotation (ES) du moteur principal est directement proportionnelle à une position d'un levier d'accélérateur et dans lequel une vitesse (VS) du véhicule et la vitesse de rotation du moteur principal sont approximativement directement proportionnelles l'une à l'autre, et
- un second mode de fonctionnement, dénommé « ECO », dans lequel le moteur principal fonctionne à une vitesse limite prédéterminée approximativement fixe et dans lequel ladite position dudit levier d'accélérateur indique exclusivement un rapport de transmission de la transmission hydrostatique ;
le véhicule est **caractérisé en ce qu'il** est conçu pour effectuer une procédure, dans ledit second mode de fonctionnement, consistant à commander le rapport de transmission de l'hydrostat de manière à forcer une valeur de pression actuelle mesurée sur la ligne haute pression (F) à un seuil de pression prédéterminé, lorsque la valeur de pression actuelle dépasse le seuil de pression prédéterminé,
- et il comprend un moyen de traitement de véhicule (UCM) configuré pour réaliser une procédure de sélection de l'un parmi deux tuples ou plus appartenant à un ensemble fini et dénombrable de tuples, dans lequel chaque tuple comprend
- ladite valeur de vitesse limite et
- ladite valeur du seuil de pression prédéterminé.
